# EUROPEAN PATENT APPLICATION

(11) **EP 4 811 182 A1**
(43) Date of publication of application: **23.09.2026**
(21) Application number: 25305393.8
(22) Date of filing: 21.03.2025
(51) Int. Cl.: G06F 21/32, H04L 9/40

(54) **LOCALIZED BIOMETRIC AUTHENTICATION WITH PROXIMITY PAIRING**

(71) Applicant: Amadeus S.A.S., 06410 Biot (FR); ICM Airport Technics Pty Ltd., Botany, NSW 2019 (AU)
(72) Inventor: ABRAHAM, Eldho, 06410 Biot (FR); LANDGREBE, Thomas, Sydney, 2076 (AU); HORSLEY, Peter, Sydney, 2076 (AU); MERRITT, Joshua, Sydney, 2213 (AU); CRUMPTON, Benjamin, Sydney, 2019 (AU); WU, Chun-Sheng, Sydney, 2217 (AU)
(74) Representative: Samson & Partner Patentanwälte mbB

(57) **Abstract**

A method for performing biometric identity validation to confirm identity of a user. The method comprises providing a mobile application configured to be executed on a device of the user, to: register an enrolment data in respect of the user, for enrolling the user for biometric identity validation; when the user device is in proximity of one or more biometric touchpoint devices, enable pairing between the user device and the one or more biometric touchpoint devices to establish, with each of the one or more biometric touchpoint devices, a respective data connection between the user device and the biometric touchpoint devices, the one or more biometric touchpoint devices each comprising a biometric camera. In response to the user presenting at any one of the one or more biometric touchpoint devices to be processed thereby, and the biometric touchpoint device capturing a live image data of the user, the captured live image data is processed to obtain a live biometric data, and a data transfer is enabled to transfer at least the live biometric data or a reference biometric data obtained from the enrolment data, between the biometric touchpoint device that captured the live image data and the device of the user via the established data connection. The identity of the user is confirmed based on a result of a match between the live biometric data and the reference biometric data.

## Description

### TECHNICAL FIELD

This disclosure relates to automated subject identity validation, and a method and system for performing the validation. In particular, it relates to a system and method of biometric identity validation based on proximity pairing between touchpoint devices and user devices.

### BACKGROUND ART

Biometric identification is used as a way of verifying identities, controlling access to restricted areas, or allowing the performance of certain processing or functions. For example, in the context of airports or other passenger terminals, there can be a number of self-service touchpoints of different types serving to provide different touchpoint functions, where biometric systems may be employed to confirm the identity of the passenger before the functions can be fulfilled. Examples of such touchpoints may include a flight check-in kiosk, a bag-drop station, a lounge check-in kiosk, etc.

Typically, this involves a comparison between a person's photograph on an identity document such as a passport, with a facial image which is acquired at the touchpoint. Verification of the person's identity is based on whether the two images match. In recent years, a more seamless way of biometric identification has been proposed, to allow passengers to enrol themselves on a biometric platform by submitting their travel data, identification document data, and their biometric data (e.g., facial image such as a selfie taken with a mobile). The database in which the records are stored is referred to as a "gallery", stored on a central identity management platform (IMP). The network of touchpoints at the airport will have access to the gallery on the central IMP or have copies of the gallery. When a passenger arrives at the airports and interact with the touchpoints, the passenger's facial image will be acquired and the algorithms will try to determine if there is a match between the acquired image and any record in the gallery. If there is a match, then the passenger's identity is validated. In effect, the passenger can use his or her face as the identification document, e.g., as a "passport". This matching process may be referred to as "1 to N" biometric identification, where "N" refers to the gallery size.

As the technology is adopted at scale, the number of records stored in a gallery, also referred to as the "gallery size" will increase. The amount of time and processing required to find a match amongst a gallery becomes greater as the gallery size increases. The probability of returning an incorrect result also increases when the gallery size increases. From a crowd control viewpoint, this can decrease the rate of passenger throughput which can be handled by the touchpoints. The technical issues may also contribute to a passenger experience that is slower and not as seamless as would be desired for airports utilizing 1 to N biometric matching.

Further, the personal nature of the biometric identification data means that the handling of data from the central IMP will be subject to factors such as regulatory factors (e.g., GDPR, or "General Data Protection Regulation"). When travel occurs at scale, the handling of central IMP data at the local touchpoints may also be limited by technical factors such as storage facility, processing speed, or communication speed.

It is to be understood that, if any prior art is referred to herein, such reference does not constitute an admission that the prior art forms a part of the common general knowledge in the art, in Australia or any other country.

### SUMMARY

Therefore, it is desirable to provided improved biometric identification solutions, that can improve the seamlessness of the journey of the passenger through the touchpoints.

It is further desirable to reduce the reliance of a central IMP in biometric identification.

In a first aspect, the invention provides a method for performing biometric identity validation to confirm identity of a user, comprising:
providing a mobile application configured to be executed on a device of the user, to:
   register an enrolment data in respect of the user, for enrolling the user for biometric identity validation; and
   when the user device is in proximity of one or more biometric touchpoint devices, enable pairing between the user device and the one or more biometric touchpoint devices to establish, with each of the one or more biometric touchpoint devices, a respective data connection between the user device and the biometric touchpoint devices, the one or more biometric touchpoint devices each comprising a biometric camera;
in response to the user presenting at any one of the one or more biometric touchpoint devices to be processed thereby, and the biometric touchpoint device capturing a live image data of the user:
   processing the captured live image data to obtain a live biometric data; and
   enabling a data transfer to transfer at least the live biometric data, or a reference biometric data obtained from the enrolment data, between the biometric touchpoint device that captured the live image data and the device of the user via the established data connection; and
confirming the identity of the user based on a result of a match between the live biometric data and the reference biometric data.

In some forms, the data communication channel established between the user device and each of the one or more biometric touchpoint devices is routed through a server.

In some forms, for each of the one or more biometric touchpoint devices, establishing the data connection between the user device and the biometric touchpoint device comprises establishing connection with a server destination for receiving, from the user device, data which is to be provided to the biometric touchpoint device.

In some forms, the method comprises providing the reference biometric data to the one or more biometric touchpoint devices paired with the user device, wherein each biometric touchpoint device dynamically keeping a local biometric gallery, and the reference biometric data is added to the respective local biometric galleries.

In some forms, the method comprises, at the touchpoint device where the live image data is captured, executing a biometric matching algorithm to determine if there is a match of the live biometric data in the local biometric gallery.

In some forms, the method comprises, if there is a match of the live biometric data in the local biometric gallery, removing the reference biometric data in respect of the user from the local biometric gallery.

In some forms, the method comprises removing the reference biometric data of the user at the local biometric gallery at any of the one or more biometric touchpoint devices at a predetermined time.

In some forms, the method comprises the biometric touchpoint device where the live image data is captured providing a result of the determination to the user device, over its communication channel with the user device.

In some forms, the method comprises providing the live biometric data to the user device, wherein the mobile application is configured to cause a biometric matching algorithm to be run to determine whether there is a match between the live biometric data provided in the data transfer and the reference biometric data.

In some forms, a result of the biometric matching algorithm is provided to the biometric touchpoint device where the live image data is captured.

In some forms, the mobile application is configured to provide activation control by defining the biometric touchpoint devices at which the user's identity can be validated.

In some forms, the activation control is updated as the user interacts with a network of biometric touchpoint devices comprising the one or more biometric touchpoint devices.

In some forms, the mobile application is configured to allow or prevent the pairing between the user device and biometric touchpoint devices in the network based on the activation control.

In some forms, enabling the pairing between the user device and the one or more biometric touchpoint devices comprises configuring the one or more biometric touchpoint devices to be detectable by the user device.

In some forms, the method comprises configuring the one or more biometric touchpoint devices to be detectable by the user device when the user device is within a detection range from the user device.

In some forms, the method comprises configuring each of the one or more biometric touchpoint devices to broadcast a signal detectable by the user device, the signal comprising an identifier in respect of the data communication channel to be established with that biometric touchpoint device.

In some forms, the method comprises updating the identifier.

In some forms, the method comprises associating each of the one or more biometric touchpoint devices with location information and providing the location information to the mobile application, wherein the mobile application is configured to monitor a current location of the user device and to search for biometric touchpoint devices which are located in an area which includes the current location of the user device.

In some forms, the pairing comprises establishing a connection between the user device and one of the one or more biometric touchpoint devices using a near field communications (NFC) protocol or by scanning a QR code presented by one of the one or more biometric touchpoint devices using the user device.

In some forms, the enrolment data comprises information from an identity document data, a reference image of the user.

In some forms, the enrolment data further comprises a travel data.

In some forms, the enrolment data comprises one or more of: user language data, user preference data, accessibility data.

In some forms, the registered enrolment data is stored in a digital wallet.

In a second aspect, the present disclosure provide a touchpoint device for performing a touchpoint function at a travel or access location. The touchpoint device comprises a biometric sensor arrangement, a display interface, a data communication module, a processor and a computer readable medium. The computer readable medium stores computer executable instructions which when executed by the processor cause the touchpoint device to:
establish one or more data connections, respectively with each of one or more user devices located in proximity of the touchpoint device and configured to hold reference biometric data associated with corresponding users;
in response to a user presenting at the touchpoint device to be processed thereby, control the biometric sensor arrangement to acquire live data of the user;
cause a live biometric data obtained from the acquired live data to be provided to the one or more user devices, or receive the reference biometric data from each of the one or more user devices via the established data connections; and
process the user by performing the touchpoint function in respect of the user, upon a confirmation of a match between the live biometric data and any of the reference biometric data.

In some forms, the computer readable medium is configured to store a local biometric gallery comprising the reference biometric data from the one or more user devices with established data connections to the touchpoint device.

In some forms, the touchpoint device is further configured to remove any user enrolment data from the local biometric gallery upon confirmation it has been matched with any live biometric data obtained from live image data captured by the biometric sensor arrangement.

In some forms, the touchpoint device is further configured to remove any user enrolment data from the local biometric gallery within a predetermined time period after the user enrolment data being added to the local biometric gallery.

In some forms, the touchpoint device is further comprising a transmission device configured to broadcast a signal within a transmission range, wherein the one or more user devices with which the data connections are established are in the transmission range.

In a further aspect, the present invention provides method of controlling restricted access for operating an apparatus or for passing through a checkpoint, comprising: providing a touchpoint device as described herein, wherein a touchpoint function of the touchpoint comprises causing an operation of the apparatus or granting access through the checkpoint, so that in response to the touchpoint device processing a user whose identity has been confirmed, the operation of the apparatus is enabled or the access through the checkpoint is granted.

### BRIEF DESCRIPTION OF THE DRAWINGS

Embodiments will now be described by way of example only, with reference to the accompanying drawings in which
**Figure 1** is a schematic depiction of a biometric identification system in accordance with an embodiment of the present invention;
**Figure 2** depicts the biometric identification system where the touchpoint device is configured to perform 1 to N biometric matching;
**Figure 3** depicts an example enrolment sequence in accordance with an embodiment of the present invention;
**Figure 4** depicts example 1 to N biometric matching sequence in accordance with an embodiment of the present invention;
**Figure 5** depicts an example of a geolocation-based pairing process in accordance with an embodiment of the present invention;
**Figures 6 (a) to (d)** illustrate the dynamic adjustment made to the local gallery at a touchpoint device based on the interaction between the touchpoint device and multiple passengers, in accordance with an embodiment of the present invention;
**Figures 7 (a) to (c)** illustrate the dynamic adjustments made to the local galleries at two touchpoint devices based on the interaction between the touchpoint devices and multiple passengers, in accordance with an embodiment of the present invention;
**Figures 8 (a) to (d)** illustrate a scenario where a passenger who has not been registered to use the automated biometric matching technology presents at a local touchpoint device;
**Figure 9** depicts an example biometric matching sequence in accordance with another embodiment of the present invention.

### DETAILED DESCRIPTION

In the following detailed description, reference is made to accompanying drawings which form a part of the detailed description. The illustrative embodiments described in the detailed description, depicted in the drawings, are not intended to be limiting. Other embodiments may be utilised and other changes may be made without departing from the spirit or scope of the subject matter presented. It will be readily understood that the aspects of the present disclosure, as generally described herein and illustrated in the drawings can be arranged, substituted, combined, separated and designed in a wide variety of different configurations, all of which are contemplated in this disclosure.

Presently, at airports or other passenger terminals, there can be multiple checkpoints where passengers need to be identified. In the present disclosure, a biometric touchpoint (also referred to as "touchpoint", for brevity) refers to a checkpoint where biometric identification is used to validate a person's identity; particular functions may be performed in response to the validation. A biometric touchpoint device (also referred to as "touchpoint device", for brevity), is provided to perform the function of a touchpoint. Automated biometric identification currently envisaged in the art uses 1 to N matching which enables a transit flow of an enrolled passenger without the passenger being required to scan his or her passport each time the passenger needs to interact with a touchpoint during the transit flow. Instead, the touchpoint device(s) will access a database on a central IMP to access the relevant passenger gallery, or store a local copy of passenger gallery from the IMP. The gallery at the IMP may include all passengers enrolled for travel. The database may present a gallery size, i.e., the number of passenger records included in the gallery, that is larger than required for some touchpoints, given the highly dynamic nature of passenger travel. The gallery size at the central database may also be of a size that incurs an unacceptable level of error risk, or that is too large for the local system at the touchpoints to efficiently process. Further, the ability of the local touchpoint to handle data from the central IMP may be subject to limitations imposed by the hardware, or limitations imposed by regulations, or both.

Challenges can also arise, when the passenger transit flows which are automatically controlled using the biometric technology, occur at scale. This may be when there are multiple passengers in respect of whom validation may be performed, and or the presence of multiple touchpoints, any one of which may be chosen by the passengers for the automated validation without the system being able to know in advance of time which touchpoint the passenger will use. In such situations, which passenger is being validated, and how to ensure the biometric touchpoint device providing the identity validation is the one at which the passenger presents, are aspects to be resolved.

Herein disclosed is a system and method for biometric identification, whereby local touchpoint devices are able to validate the identity of enrolled passengers, without access to a central record of all passengers expected to transit through the area or expected to transit through the particular touchpoint zone in which the devices are located, even though there is no prior knowledge of which passengers will present at which specific touchpoint devices. Its implementation can help to improve passenger throughput and also streamline the automated self-service process for the passengers at each touchpoint, while reducing the reliance upon the central IMPs. The technology will therefore help to facilitate an end-to-end automated (self-service) transit flow. Embodiments of the system are configured to provide the identify validation locally, where a local biometric touchpoint device can validate a passenger without the local biometric touchpoint device making a reference to the central IMP.

On a higher level, the system enables an integration between the local biometric identity validation, and the transit or throughput dynamics of passengers through the network of touchpoints.

In the below, the system will be described in more detail. The system is described the context of the passenger's interaction with biometric touchpoint devices provided at the "touchpoints" (also referred to as "checkpoints") in an airport, or another port or hub for a different mode of travel, where automatic 1 to N biometric identification of passengers is performed. However, it will be understood that the system and method described may have utility in other context or applications, for example, where biometrics are used to control the access of registered persons to operate particular apparatus or equipment, pass through various checkpoints, or pass through entry or exit locations in a premise.

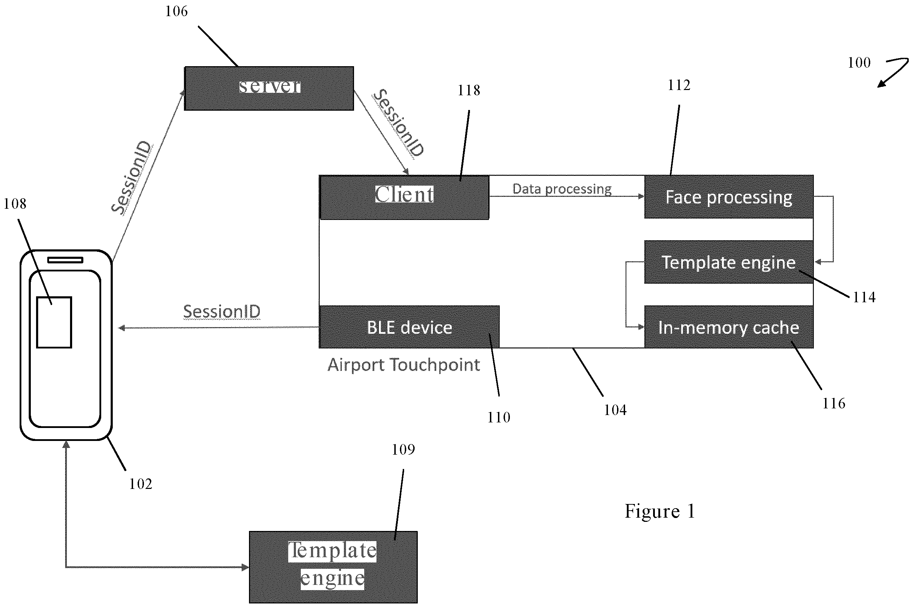

Figure 1 schematically depicts a biometric identification system 100 in accordance with one embodiment. In this embodiment, the biometric identification system 100 comprises a passenger device 102 of a passenger who has opted to enrol in the automated biometric technology, a touchpoint device 104 configured to perform biometric matching locally, and a routing server 106 which is configured to route the data communication between the passenger device 102 and the touchpoint device 104. For simplicity, Figure 1 shows one passenger device 102 and one touchpoint device 104. In practice, there may be multiple passenger devices 102 or multiple biometric touchpoint devices 104, or both. The paragraphs below provide a description of how the system 100 operates to validate a passenger, i.e., identify the passenger and verify the passenger identity is enrolled for travel. Description illustrating how the system operates in situations where there are multiple passenger devices 102 or multiple touchpoint devices, will be provided later.

The touchpoint device 104 is configured to be embedded or to cooperate with hardware and software that enables the touchpoint device 104 to be pairable with a passenger device 102. Being "paired" means a data connection is established between the touchpoint device 104 and the mobile application running on the passenger device 102. The data connection may be web-based and bi-directional.

The passenger device 102 is a mobile device such as a mobile phone or tablet, or a smart watch. The processor or processing arrangement of the passenger device 102 is configured to execute a mobile application 108 which allows the passenger device to interact with the routing server 106 and the touchpoint device 104. In some embodiments where the images are templatized before being matched, the mobile application 108 may also be configured to interact with a template engine 109 configured to generate the templatized biometric data which will be used for biometric matching, at the time of validating the passenger. However, the facial images may alternatively be stored without being templatized, in some embodiments where the images are templatized before being matched. For example, in implementations where the matching occurs at the touchpoint devices 104, the mobile application 108 will transmit the facial image via the data connection, and then the touchpoint device 104 will perform the required processing. This means the mobile application 108 can interact with the touchpoint devices 104 irrespective of which facial processing models are being used at the touchpoint devices 104. The facial images may be encoded before being stored and/or before being sent to the touchpoint devices 104. The mobile application 108 may be a native application or a web-based application. The mobile application 108 has access to a memory location where information uploaded in respect of the passenger will be kept. The uploaded information provides at least the information which is required to enrol the passenger for biometric matching. The uploaded information may include information regarding the passenger's travel (e.g., boarding pass data), a reference image (e.g. a selfie photo), and identity document data (e.g., passport data). Optionally, the information will also include personalization data for the passenger, such as the passenger's preferred language or other accessibility preferences. It will be appreciated that the uploaded information may be different.

The identity document data and the reference image may be first processed to determine whether there is a biometric match between the two pieces of data, to verify that the reference image and the identity document belong to the same passenger. The initial biometric matching may involve templatized biometrics using the template engine 109. Verification of the reference image means that the biometrics from the reference image may be saved to be used as part of the enrolment data to enrol the passenger for automated biometric matching at the airport. Successful uploading and verification of the information will register the passenger in the mobile application 108. The reference image will be used to generate the reference biometric data. However, in some embodiments, the identity document data may be used to generate the reference biometric data and a selfie is not required.

As mentioned above, in embodiments involving template-based biometric matching, the creation of the biometric template from the reference image may be performed by a template engine 109 hosted on a backend server supporting the mobile application 108, which sends the biometric template back to the passenger device 102, without storing the reference image or the biometric template. More generally, the template engine 109 may be hosted by a separate server or platform to the routing server 106 such as a backend server or server arrangement supporting the mobile application 108, which may be on an IMP and may be a central IMP, or by the same server arrangement to which the routing server 106 belongs. Alternatively, the template engine 109 may be run by the processing arrangement of the passenger device 102. The enrolment data may be stored in a mobile wallet. In some embodiments, the reference identity data may be derived via a trusted digital-ID creation process, such as an e-passport enrolment flow, European wallet (e.g., EU Digital Identity Wallet), Google wallet etc.

It is expected that the relevant data will have been registered within the mobile application 108 so that it is ready to be used, prior to the passenger approaching the touchpoint device 104, e.g., before the passenger arrives at the airport. In practical implementations this may mean that the mobile application 108 is in a travel-ready mode, ready to pair with touchpoint devices. The mobile application 108 may enter the travel-ready mode as soon as the passenger is appropriate registered; it may automatically launch into this travel-ready mode as triggered by a detection of the location of the passenger device 102 being in a particular area, such as an airport terminal according to the passenger's boarding pass data; or it may be caused to enter the travel-ready mode by via user action (e.g., by the passenger pressing a button).

Preferably, when the passenger arrives in the detection range of one or more touchpoint devices 104, within which the passenger device 102 is able to detect the touchpoint devices 104, the mobile application 108 executing on the passenger device 102 will already have access to the required data. Of course, the passenger still has the ability to upload the information to obtain the required enrolment data, and/or launch the mobile application 108 after he or she enters the touchpoint zone, thereby enabling his or her passenger device 104 to detect the touchpoint devices 104 and allow biometric enrolment.

The touchpoint device 104 is configured to have the ability to be paired with one or more passenger devices 102 on which the mobile application 108 is activated, i.e., "travel ready". Being "paired" means that a data connection is made between the devices 102, 104, preferably via the server 106. In some embodiments, this enables a local "gallery" to be built using the enrolment data that has been transferred to the touchpoint device 104 over the data connection, and the touchpoint device 104 is configured to perform 1 to N biometric matching based on the local gallery, without needing to access a central IMP.

In the embodiments, the "pairing" only initiates once the passenger device 102 is in the proximity of the touchpoint device 104, as is explained in more detail below.

In preferred embodiments, the touchpoint device 104 is configured to be automatically detectable by passenger devices 102 on which the mobile application is being executed. Some suitable touchpoint devices for implementing aspects of the present invention are described in Applicant's PCT application PCT/EP2024/076864, the entire content of which is incorporated herein by reference.

The detection range of a touchpoint device 104, in relation to its ability to be "seen" by the passenger device 102, will be determined by the mechanism by which the touchpoint device 104 can be "seen". The detection range may be defined by a maximum distance from which the passenger device 102 can detect the touchpoint device 104. For example, a five-metre range means that the touchpoint device 104 is detectable by passenger devices 102 as far as 5 meters away. Typically, the range will be several meters, e.g., 2-5 meters. The choice of range, which may affect the choice of the component used to "broadcast" the presence of the touchpoint device 104, is preferably made to provide a long enough range that the pairing process can initiate whilst the passenger is still several meters away from the biometric touchpoint device 104, but short enough to avoid the passenger device 102 pairing with too many touchpoint devices 104 at the same time. This means that the pairing process can start whilst the passenger is still walking toward a touchpoint device 104, reducing the amount of time the passenger needs to wait upon presenting at a touchpoint device 104, improving throughput. By limiting the range this means that the number of touchpoint devices 104 which will potentially be paired with the passenger device 102 is reduced, using less data transfer resources and requiring less data storage and processing resources at the biometric touchpoint devices 104 overall.

In some embodiments, the touchpoint device 104 may be configured to utilize radio frequency (RF) communication with external devices such as the passenger devices, using wireless communication protocols such as Bluetooth. For example, the touchpoint device 104 may be equipped with, or be installed alongside, one or more directional or non-directional antennas 110. In one example the antennas include a phased array antenna. The directionality of the antenna(s) will affect the directionality of the detection range. The RF communication may be used to broadcast a signal such as a beacon. The signal may include data to identify the touchpoint device 104 or the data connection with the touchpoint device 104. For example, the signal may include a particular digital pattern which is recognisable by the mobile application as being associated with touchpoint devices 104. This pattern may be in the form of a particular data packet structure. Optionally, there may be variations in the structure used. For example, different data packet structures may be used in respect of different types of touchpoint devices 104; different data packet structures may be used in respect of touchpoint devices 104 located in different areas. This allows the mobile application 108 to recognise the types and/or the locations of touchpoint devices with which it is pairing.

The signal may include a session identifier (ID) to identify the data connection with the touchpoint device 104. Different session IDs will be used in respect of data connections with different touchpoint devices 104. If multiple passenger devices 102 are paired with the touchpoint device 104, the same session ID may be used in respect of the data connection between each of the multiple passenger devices 102 and the touchpoint device 104. The signal may be in the form of Bluetooth (BLE) packets which advertise the touchpoint device 104 to passenger devices 102 which are in range of the broadcast. Where the communication of the data in a data connection is facilitated by the server, the data packets may advertise a Uniform Resource Locator (URL) address that will identify the server location as the data destination on the server 106. The broadcast range for the signal will depend on the specific implementation and the hardware used. In some examples, the broadcast range may be around 2 to 5 meters.

The session ID may be included with the broadcast signal. The broadcast signal may also include a unique pattern so that it is recognisable by the mobile application 108. The mobile application 108 executing on the passenger device 102, on detection of the broadcast signal, will cause a data connection to be established with the touchpoint device 104 via the server 106, so that the travel and identity data linked to the mobile application 108 may be transferred to the touchpoint device 104 via the server 106. The mobile application 108 may check that the signal is of a sufficient strength or quality, before allowing the pairing to occur. The data transfer from the mobile device 102 to the server 106 may be via a wireless data connection such as a 4G or 5G connection or over a wireless network at the airport. The data transfer from the server 106 and the touchpoint device 104 may be via a wired or wireless network at the airport.

The touchpoint device 104 includes a client module 118 configured to receive data which is transferred from the passenger device 102, and to initiate request to send the result of any biometric matching which has been performed at the touchpoint device 104. The touchpoint device 104 includes a processing arrangement configured to execute algorithms to handle the received data. For example, if the identity data received includes facial image data, then the touchpoint device 104 may be configured to execute face processing algorithms 112 to process the received image to detect the face. The detected face may be processed using a template engine 114 to templatize the facial image data, i.e., extract distinct features of the face into a biometric template. The templatized data may be stored in a local memory 116, in order to dynamically build a local "gallery". The memory 116 may be provided in the form of an in-memory cache. This may help provide a faster response time when the gallery is modified, or when the gallery is queried during 1 to N matching. Although only one passenger device 102 is shown in Figure 1, it will be understood that if two or more passenger devices 102 are in range of the touchpoint device 104, this may cause a transfer of the data associated with the travel and identity of the passengers associated with the two or more passengers to the touchpoint device 104 to be added to the local gallery. The local gallery will be used, for the performance of the 1 to N biometric matching locally at the touchpoint device 104. "N" may therefore be one or more than one, depending on the number of paired passenger devices 102. It will typically be a much smaller number than the size in a centrally kept gallery. The inclusion of the passenger's data in the local gallery means the passenger is "enrolled" at the touchpoint device 104 locally. Arrows shown in Figure 1 depict the aforementioned processing flow.

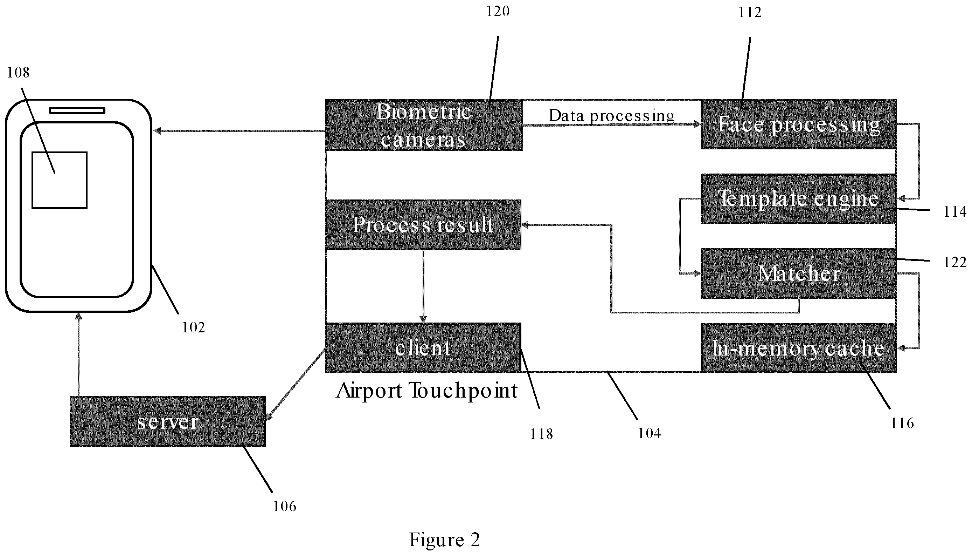

Figure 2 depicts the biometric identification system 100 shown in Figure 1, showing the features in the touchpoint device 104 involved in the 1 to N biometric matching process. The touchpoint device 104 includes one or more sensors 112 to acquire live biometric data, shown in Figure 2 as the "biometric cameras" 112. The live biometric data is, for example, a live facial image of the passenger. The acquired live biometric data will be processed by the processing module 112, and optionally a template engine 114 if the biometric matching is template based. Matching algorithms (represented as the matching module 122) will perform the 1 to N biometric matching to see if a match with the local gallery at the touchpoint device 104 can be found. If a match is found, then the local gallery will be modified to remove the record in relation to the passenger from the gallery, if each passenger is expected to transact with the touchpoint device no more than only once (e.g., check-in or boarding access). However the passenger's record may be retained in the gallery for a period of time, if the passenger can transact with the touchpoint device one or more times (e.g., lounge access). The client module 118 will initiate a request to the server 106, to send the matching result to the instance of the mobile application 108 from which the enrolment data was supplied. Arrows shown in Figure 2 depicts the aforementioned processing flow.

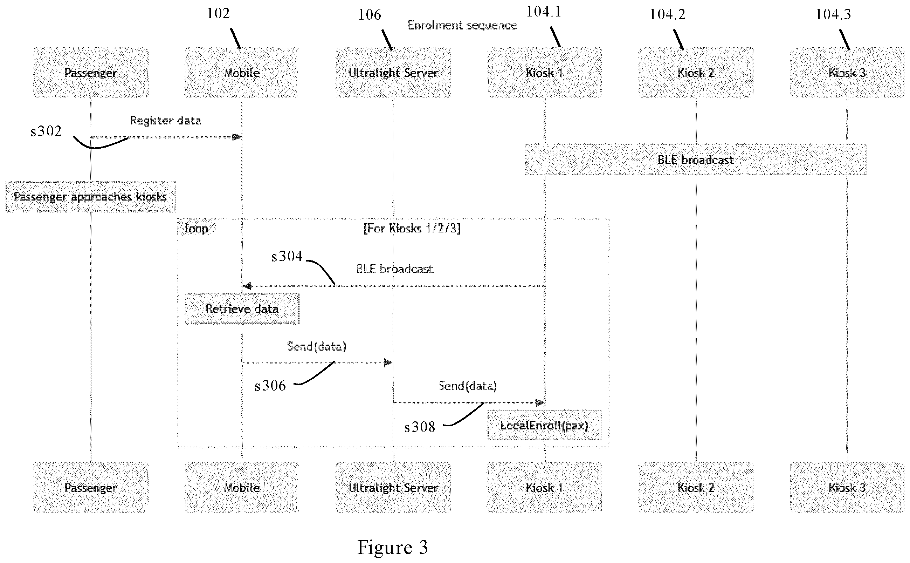

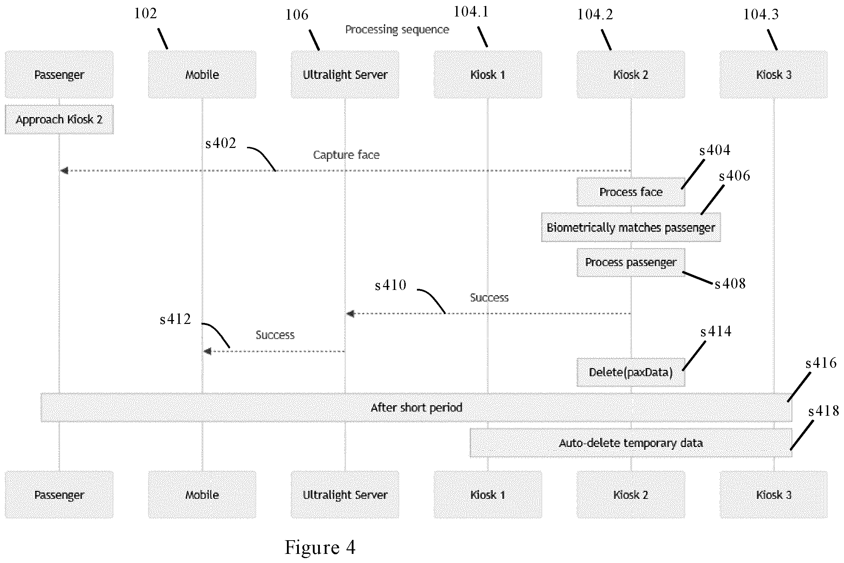

Examples of an enrolment sequence and a "1 to N" matching sequence are shown, in Figure 3 and Figure 4 respectively. Referring to Figure 3, prior to arriving at the airport or approaching the touchpoint zone, a passenger will provide the data for registering his or her travel with the mobile application 108, and for the data to be registered (step s302). As the passenger (and hence the passenger device 102 which is expected to be on or near the passenger) approaches the touchpoint zone, the passenger's mobile device 102 is expected to eventually come into the broadcast range of one or more of the touchpoint devices 104.1, 104.2, 104.3. It will be noted that although three touchpoint devices 104.1, 104.2, 104.3 are shown, this is only an example and more or fewer touchpoint devices may be included. In this example, the passenger device 102 is moved into the broadcast range of touchpoint device 104.1 and accordingly receives the broadcast signal from touchpoint device 104.1 (step s304). This triggers the passenger device 102 to retrieve the registered enrolment data, and send the data to the server 106 (step s306). The server 106 sends the enrolment data to the touchpoint device 104.1 (step s308), where the passenger will be enrolled and added to the local gallery at the touchpoint device 104.1. The passenger whose enrolment data is saved on the passenger device 102 will be enrolled at any of the touchpoint device(s) if the passenger device 102 is in their broadcast ranges.

Figure 4 depicts an example of a 1 to N matching sequence. In this example, again, three touchpoint devices 104.1, 104.2, 104.3 are shown, but this is merely for illustration purposes, and more or fewer touchpoint devices may be available. The passenger has been enrolled at all three touchpoint devices 104.1, 104.2, 104.3 . In this example, the passenger presents at touchpoint 104.2. The passenger presentation causes the touchpoint device 104.2 to capture a biometric image (e.g., facial image) of the passenger (step s402). The captured image will be processed (step s404), and then the 1 to N matching will be performed by the local touchpoint biometric server to match the biometrics from the captured image against the local gallery (step s406). If there is a match, the passenger will be processed appropriately based on the type of the touchpoint device 104.2 (step s408), e.g., checked in, allowed further interaction for bag drop, allowed access to pass through a barrier or enter an area, etc. A notification of a successful match may be sent to the server 106 (step s410), and the server 106 then sends the success notification to the passenger device 102 (step s412). The successful matching notification can be used by the mobile application 108 of the passenger device 102 to manage the passenger's travel flow through the airport, in defining the next zones or stages which remain in the travel flow, and/or the next areas that are accessible by the passenger (e.g., lounge access and gate access). This may also be used to provide the passenger with directions as to where in the airport to go, or update relevant airport information, etc.

In the illustrated example, the successful match causes the gallery management algorithms at the touchpoint 104.2 to remove the passenger from the local gallery where the passenger has been matched (step s414), as the passenger is considered to have passed through the relevant point in the transit corresponding to the type of touchpoint device 104.2. This may be considered a "passthrough" deletion from the local gallery at the touchpoint device 104.2. At the other touchpoint devices 104.1, 104.3 where the biometric matching in respect of the passenger's record did not occur, after waiting for a predetermined period of time (step s416), the touchpoint devices 104.1, 104.3 will automatically delete the passenger data from their respective galleries (step s418). The connection with the passenger device 102 may be removed after the passenger device 102 receive notification of a successful biometric match.

It will be understood that there may be alternative ways of triggering the pairing between a passenger device 102 and a biometric touchpoint device, and thus the enrolment of a passenger at a biometric touchpoint device 104.

For example, the enrolment may be triggered when the passenger scans a QR code at a biometric touchpoint device 104 using his or her passenger device 102, or taps the passenger device 102 on a near field communication (NFC) tag on the touchpoint device 104. This causes the passenger device 102 and the touchpoint device 104 to establish a connection via the server 106 that allows the required data exchange. Therefore, these physical actions provide alternative means of pairing the passenger device 102 with the touchpoint devices 104. However, in such cases the enrolment data will not have already been added to the local gallery or galleries, prior to the passenger presenting at a touchpoint device 104.

In some embodiments, geolocation may be used. In these embodiments, the touchpoint devices 104 will each be assigned with a geolocation. Multiple touchpoint devices 104 may be assigned to the same geolocation coordinates. The touchpoint devices 104 located within the same geolocation zone may be assigned with the same geolocation data. The geolocation zone may be predefined in the system, and/or may be dependent on the resolution of the geolocation technology used. In such embodiments, passenger devices 102 equipped with geolocation technology such as GPS (Global Positioning System) may "detect" those touchpoint devices 104 which are in an area in which the passenger device 102 is located.

Based on the travel information, which includes the airport information, and if applicable the terminal information, a geolocation data may be assigned in respect of the geolocation zone or zones where the passenger's airport transit is expected to occur. Each geolocation zone may be, for instance, defined in the form of a latitude-longitude bounding box. The geolocation data is stored in the mobile application 108. When the passenger arrives at the airport and enters the geolocation zone(s), the mobile application 108 can detect that the passenger device 102 is in a zone including the touchpoint devices 104, and pair with the touchpoint devices 104 in the geolocation zone.

The geolocation data which is stored in the mobile application 108 may include, initially, areas where the biometric touchpoint devices 104 that the passenger is expected to transact with first, are located. For instance, these may be check-in kiosks. A successful transaction in the zone(s) where the check-in kiosks are located may cause an update of the geolocation data stored in the mobile application 108. The geolocation data may be updated to include geolocation data in respect of the zone or zones, where the biometric touchpoint devices 104 with which the passenger is able to transact next (e.g., lounge access kiosk, bag-drop kiosk), are located. Then, when the passenger enters one of the zone or zones according to the updated geolocation data, the passenger device 102 will be paired with the touchpoint devices 104 in the zone in which the passenger device 102 is located. The removal of the passenger's data from the specific local galleries of the individual touchpoint devices 104 may be the same as in the other embodiments using other pairing methods.

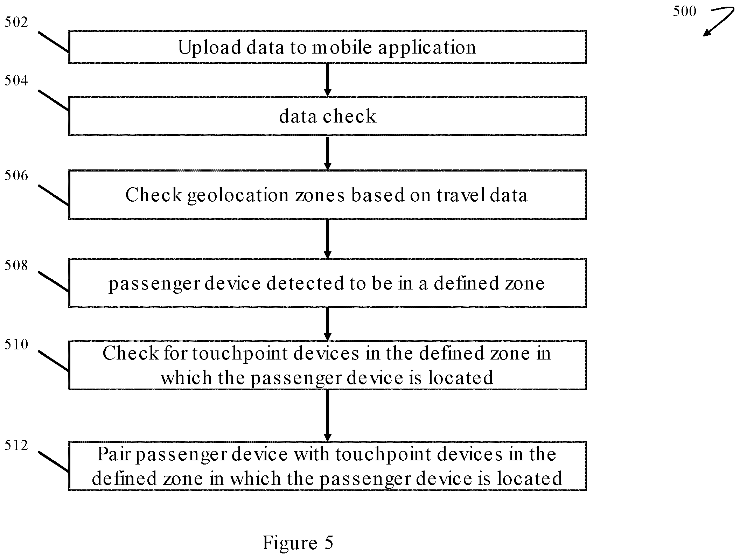

An example pairing process 500 is shown in Figure 5. At step 502, the information used for enrolling the passenger, and optionally for registering specific passenger preference or accessibility requirements, is provided via the mobile application 108. The passenger preference information such as the passenger's preferred language may be used to control the display of any information or instruction to the passenger at a touchpoint device 104 whilst that touchpoint device is interacting with the specific passenger, e.g., whilst displaying confirmation of a successful match or a progress or completion of the required transaction at the touchpoint, directions, further questions or requests for confirmation of particular information, or an instruction to the user in respect of the next step(s) in the transit journey. The passenger accessibility information may be useful in facilitating accessibility resources to be provided to the passenger. For example, upon a successful touchpoint transaction (e.g., checking in, bag drop, area access, etc), the passenger accessibility information may be sent to personnel or staff so that appropriate accessibility resources can be offered to the passenger. At step 504, the reference biometric data and the travel document data are processed for the mobile application 108 to confirm the reference biometric data the travel document data are matched, i.e., are of the same person. At step 506, a geolocation data is determined based on the travel data (e.g., airport, terminal data in the boarding pass), and stored in the mobile application 108. At step 508, the passenger device 102's location service detects that it is in the area which is within the target area defined by the stored location data. Ate step 510, the detection causes the mobile application 108 to query the server 106 to check if there are touchpoint devices 104 in the target area that the passenger device 102 is able to transact with. At step 512 the server 106 replies with the destination(s) for the communication of the enrolment data associated with the touchpoint devices 104 with which the passenger device 102 can transact, allowing the passenger device 102 to be paired with these touchpoint devices 104. During the data communication process where the enrolment data is provided to the touchpoint devices 104 with which the passenger device 102 is paired, an identifier in respect of the passenger device 102 may be included in the data packet, allowing the identification of the passenger device 102 to which a biometric matching success/failure notification is to be sent.

The data connection between a passenger device 102 and a touchpoint device 104 may be removed after a successful match between the live biometric data from the live image captured at the touchpoint device 104, and the reference biometric data stored on the passenger device 102. For example, the removal of the data connection may occur if the touchpoint device 104 is intended to perform a touchpoint function that can only be done once in respect of the passenger, e.g., check-in, allow single-entry access into a restricted area, etc. The removal may occur after confirmation that the touchpoint device has finished processing the passenger associated with the matched reference biometric data. The data connection may be removed after timing out, even when there has not been a match.

In some embodiments, two or more ways of pairing may be enabled to provide redundancy in the system and to be able to handle different types of passenger devices.

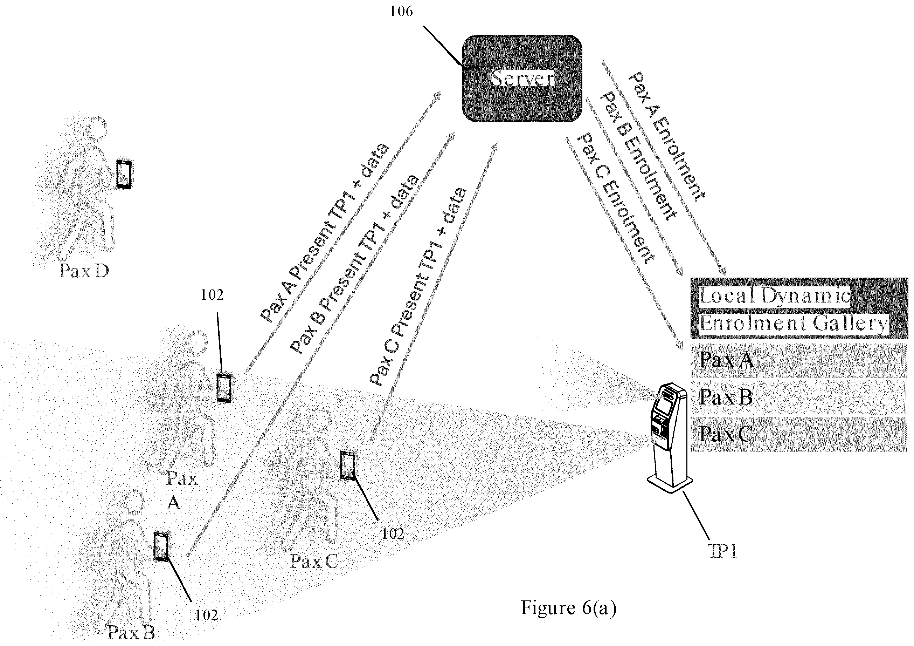

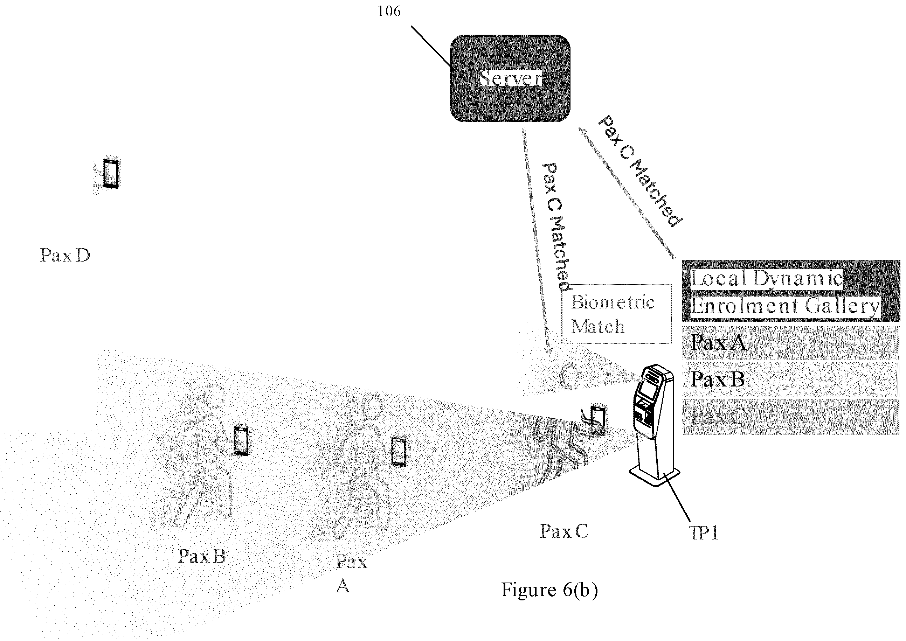

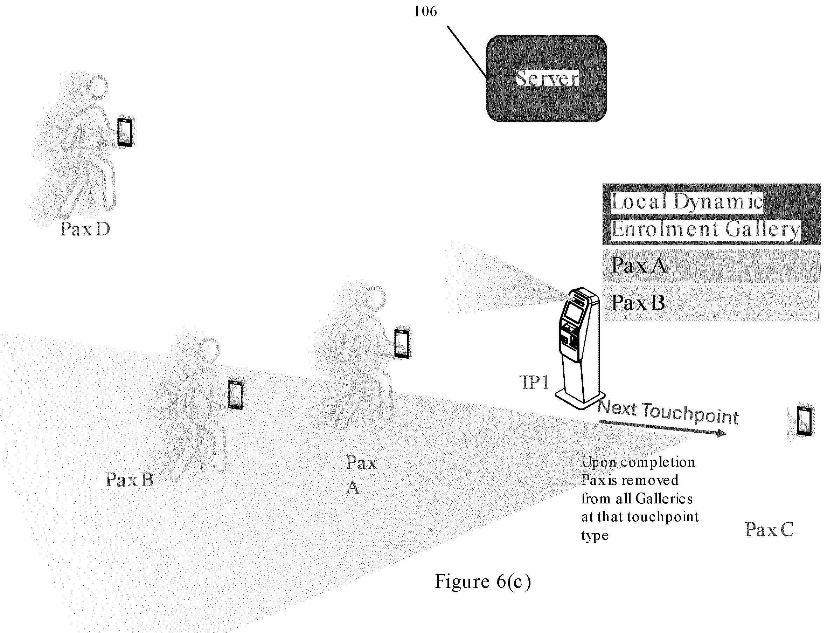

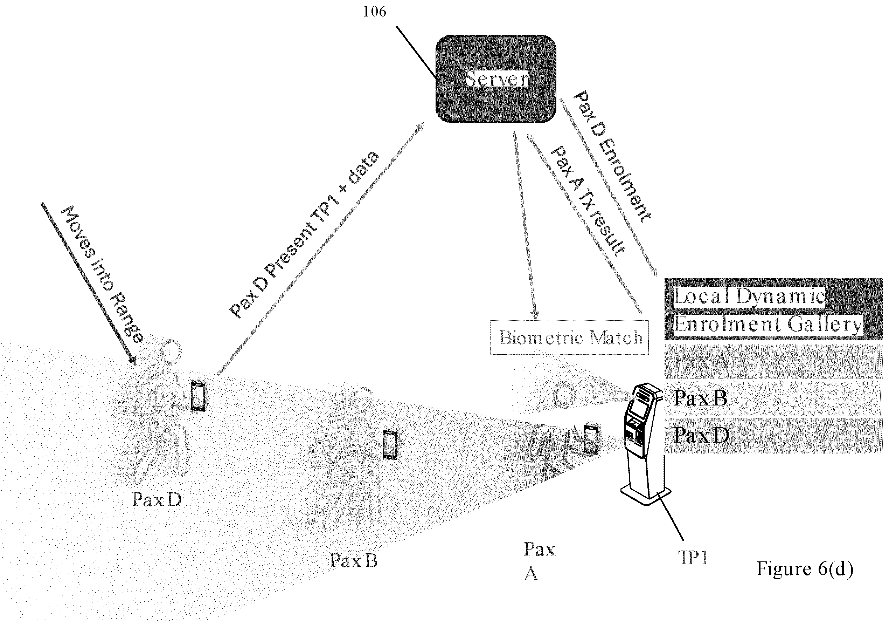

Figures 6 to 8 illustrate various enrolment and validation use cases to illustrate the working of embodiments of the present invention, where the touchpoint devices 104 are configured to be automatically detectable by the passenger devices 102 running the mobile application 108. The use case depicts example scenarios of interactions between one or more passengers and one or more touchpoint devices 104.

Figures 6(a) to (d) depicts the dynamic adjustment made to the local gallery at a touchpoint device "TP1" where multiple passengers come into its vicinity. In Figure 6(a), four passengers "PAX A", "PAX B", "PAX C", and "PAX D" are near the touchpoint device TP1. All four passengers are enrolled in the automated biometric identity validation, and have arrived at the airport, having activated the mobile application 108 executing on their mobile devices 102. Only passengers PAX A, PAX B, and PAX C are in the detection range of the touchpoint device TP1 which is configured to "broadcast" its presence by advertising its session ID and connection destination for connecting via the server 106. Therefore the passenger devices 102 of PAX A, PAX B, and PAX C are all paired with the touchpoint device TP1 by the establishment of the connection. The mobile application 108 on each of PAX A, PAX B, and PAX C's devices 102 will transmit the respective passenger's registered data to the server 106. The touchpoint device TP1 requests the data from the server 106 and saves the data into a local enrolment gallery. Passengers PAX A, PAX B, and PAX C are now enrolled at the local biometric touchpoint device 104. The local gallery size at the touchpoint device TP1 is 3.

In Figure 6(b), passenger PAX C presents at the touchpoint device TP1. The touchpoint device TP1 acquires the live facial image of passenger PAX C and performs biometric identification. PAX C will be validated if the live image matches the enrolment record for PAX C. Passenger PAX C is validated and is permitted to continue on the transit through to the next touchpoint(s). The notification that PAX C has been matched with a record in the local gallery (and thus validated) is sent to the server 106 and from the server 106 to PAX C's device. The mobile application 108 on PAX C's device 102 updates to reflect the updated progress in PAX C's journey, and may prevent PAX C from any further transactions with the type of touchpoint corresponding to TP1, depending on what type of touchpoint TP1 is.

As shown in Figure 6(c), passenger PAX C's record is deleted from the local enrolment gallery at the touchpoint device TP1 as PAX C has been matched at the device. Passengers PAX A and PAX B are the only passengers within the detection range of the touchpoint device TP1, and neither has presented at the touchpoint device TP1. The local gallery at the touchpoint device TP1now only retains the enrolment data for passengers PAX A and PAX B.

In Figure 6(d), passenger PAX D has now moved into the detection range of the touchpoint device TP1 and PAX D's passenger device 102 has detected and paired with the touchpoint device TP1. The local gallery at the touchpoint device TP1 now includes the records of PAX A, PAX B, and PAX D. Figure 6(d) also shows that PAX A now presents at the touchpoint device TP1 where the passenger is being identified and validated for travel.

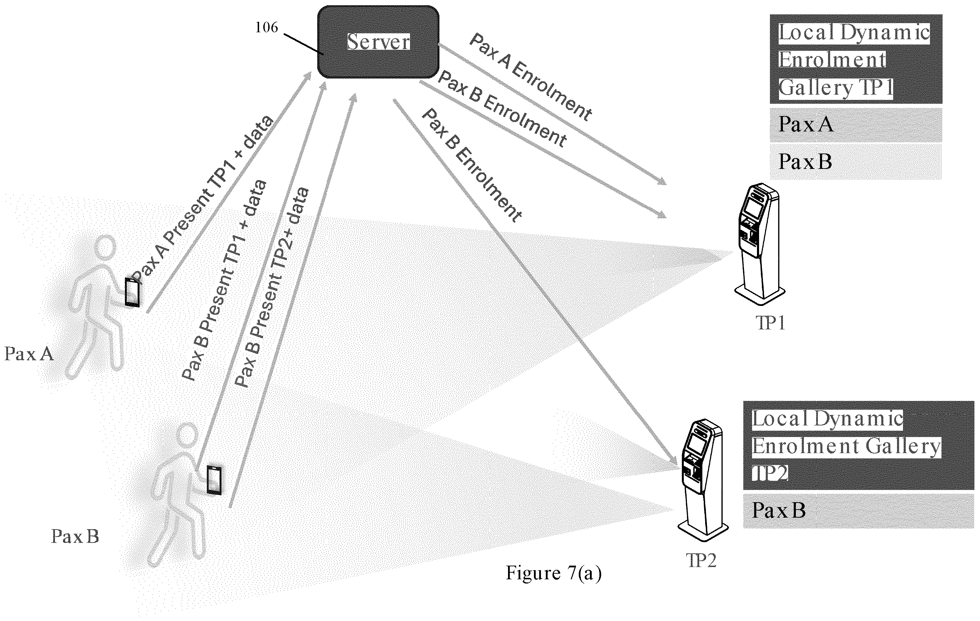

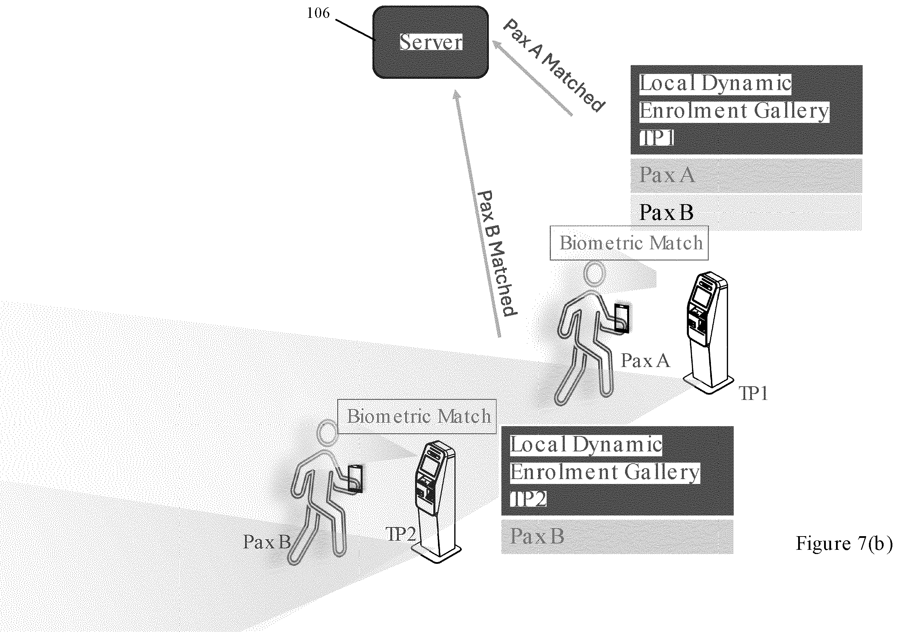

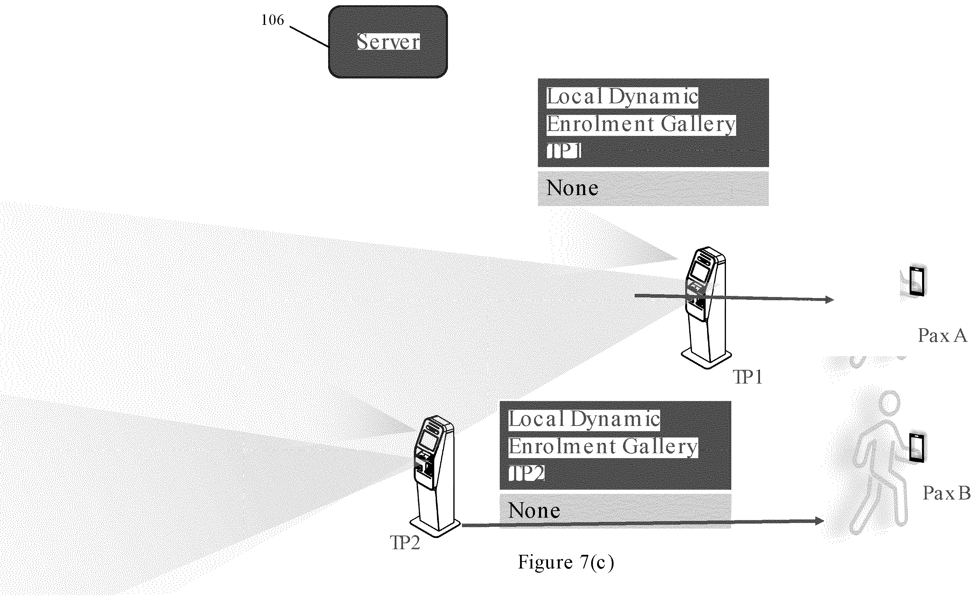

Figures 7(a) to (c) depict dynamic changes in the local galleries of two touchpoint devices "TP1", "TP2", in response to multiple passengers transiting in the area. In Figure 7(a), both passengers PAX A, PAX B are in the detection range of the touchpoint device TP1 and their records are both added to the local gallery at TP1. Only passenger PAX B is in the detection range for the touchpoint device TP2 and only PAX B's record is added to the local gallery at TP2. In Figure 7(b), PAX A presents at TP1 and PAX B presents at TP2. Biometric matching is performed at TP1 to validate the identity of PAX A, and biometric matching is performed at TP2 to validate the identity of PAX B. In Figure 7(c), PAX A is validated at TP1 and PAX A's record is removed from the local gallery at TP1. PAX B is validated at TP2 and PAX B's record is removed from the local gallery at TP2. As PAX B does not present at TP1, after a time period, PAX B's record is also removed from the local gallery at TP1. In this example, TP1 is of a touchpoint type where only a single transaction with this type of touchpoints is permitted, e.g., a check-in kiosk. PAX A will be prevented from transacting with TP1 or another check-in kiosk again, as the biometric matching notification which is sent to PAX A's passenger device 102 will update the types of touchpoint devices that PAX A may transact with. For example, the notification of a successful transaction with the touchpoint type of TP1, e.g., check-in kiosk, sets a flag that prevents the mobile application from permitting the data transfer to enrol PAX A with another touchpoint device of the same type.

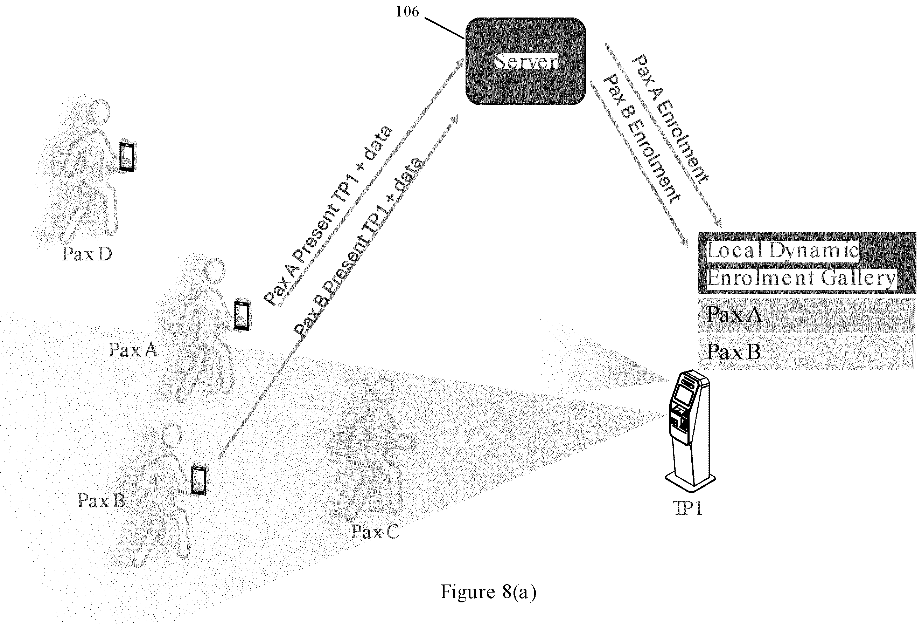

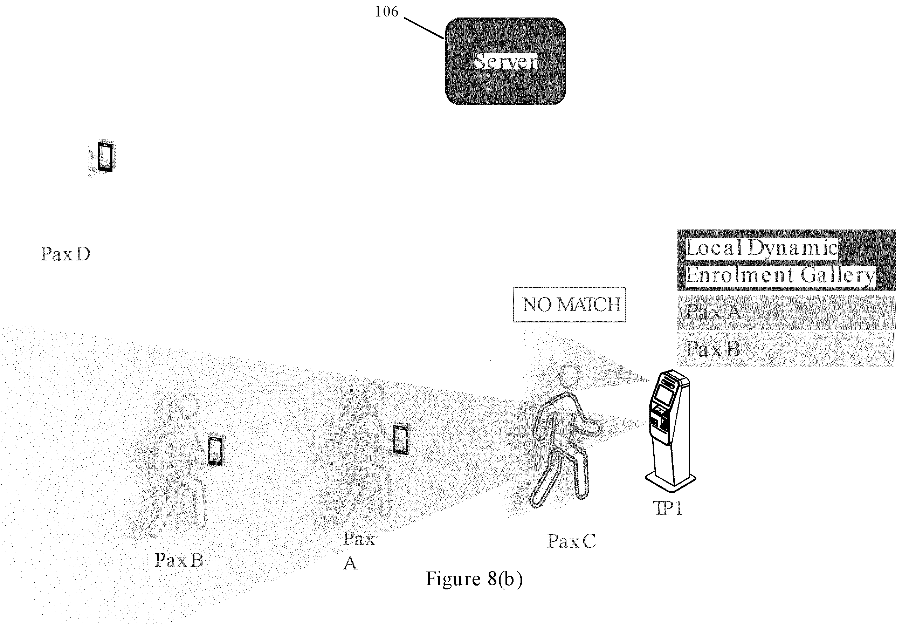

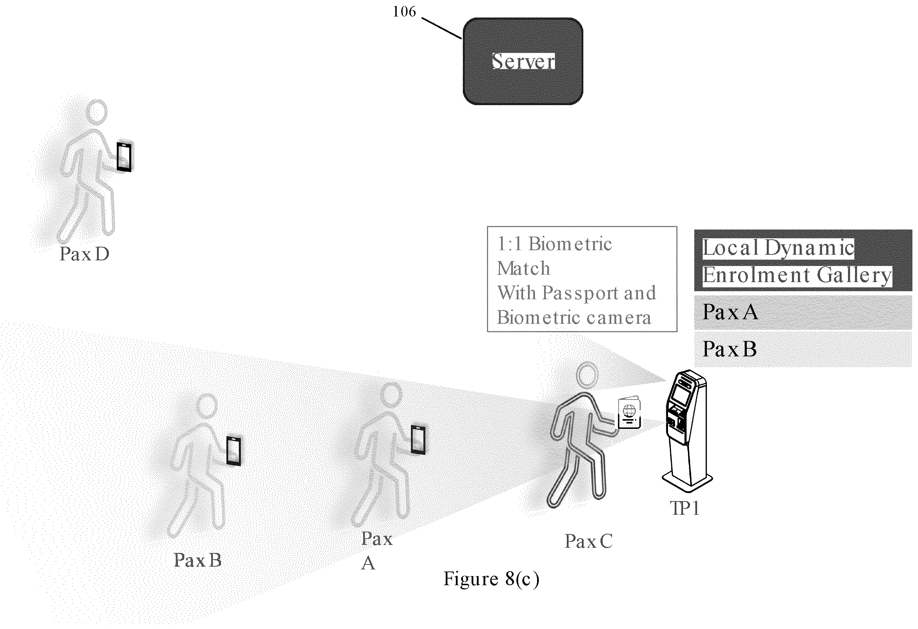

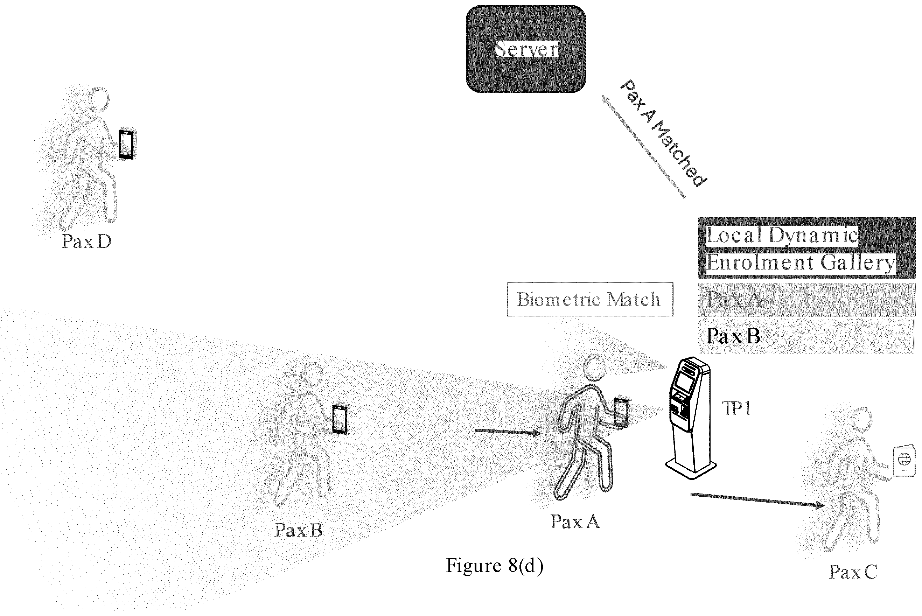

Figures 8(a) to (d) illustrate a scenario where a passenger who has not registered to use the automated biometric matching technology presents at a local touchpoint device. In Figure 8(a), PAX A, PAX B, PAX C are in the detection range of the touchpoint device "TP1". However, only PAX A and PAX B registered to use the technology, and therefore only the records of PAX A and PAX B are included in the local gallery of the touchpoint device TP1. In Figure 8(b), PAX C presents at the touchpoint device TP1, and the device TP1 acquires a live image of PAX C but will not be able to find a match for PAX C in its local gallery. This returns a notification that matching is not successful. In all embodiments, a notification that no match is found may trigger a fallback flow, i.e., an alternative process to validate the identity of the traveller. For example, PAX C may be asked to present his or her passport, for the touchpoint device TP1 to perform a 1:1 biometric authentication. In Figure 8(c), PAX C is validated using the fallback flow, with the data from the passport and the live image acquired by the biometric camera at the touchpoint device TP1. No change is made to the local gallery at TP1. In Figure 8(d), PAX C leaves TP1 and PAX A presents at TP1. In this example, the biometric camera at TP1 acquires the live image of PAX A and is able to match it to a record in the gallery. The notification that PAX A is matched is sent to the server 106. PAX A's record will be removed from the local gallery.

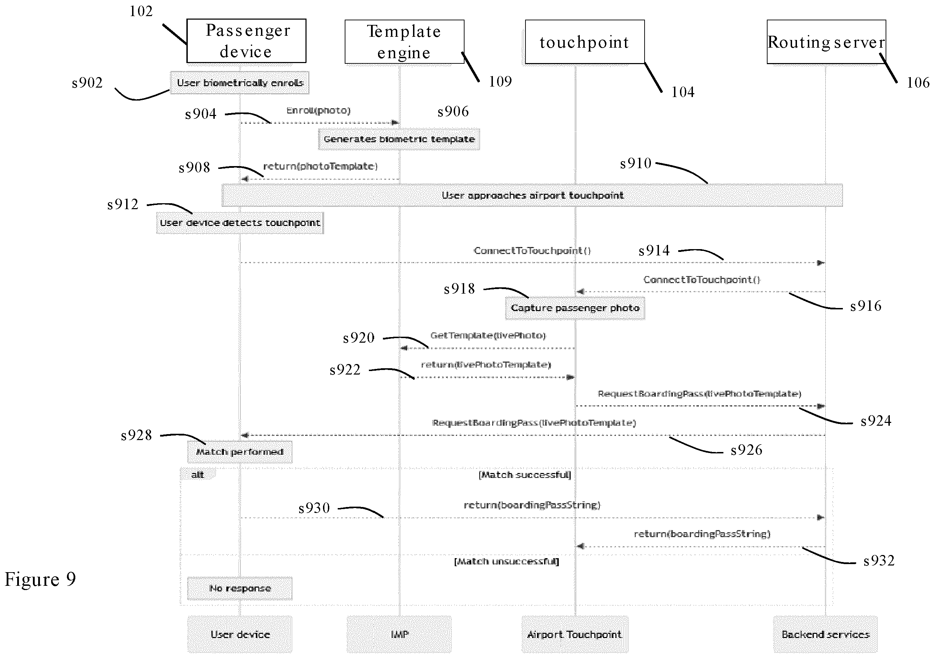

In the embodiments, the mobile application 108 may be configured to provide "activation control" to control the types of "touchpoint zones" in which the passenger's identity can be biometrically validated, i.e., where the passenger device 102 can transact with the touchpoint devices. As mentioned earlier, there are different types of touchpoints, and the touchpoints may be located in different areas. A touchpoint zone may include all of the touchpoints of a specific type, or all of the touchpoints in a specific area, or only the touchpoints of a particular type within a particular area. For example, biometric check-in kiosks are touchpoint devices in the "check-in zone". The implementation of the activation control means the passengers enrolled to use the technology will only be activated to "pair" with the touchpoint devices belong to the touchpoint zones that are "activated" meaning allocated to their travel, at any particular time. The control of which touchpoint zones are activated may be defined by a time window and zone-allocation table. This data may be stored as a token by the mobile application 108, to control which touchpoint devices 104, with which the passenger device 102 can transact. The information will be updated as the passenger continues on his or her journey through the airport, triggered by the notifications from the server 106 as described in the above. The information may also be updated by other sources, such as the airport system indicating a change in, e.g., the boarding gate, boarding terminal, boarding time
Figure 9 depicts an example of an event flow, illustrating an alternative embodiment of the present system, where the biometric validation occurs at the passenger device 102 rather than at the local touchpoint device 104 with which the passenger device 102 is paired. For simplicity, the alternative embodiment is illustrated with one passenger device 102 and one touchpoint device 104. However, the system may include more passenger devices 102s or more touchpoint devices 104, or both. As with the other embodiments, the touchpoint device 104 and the passenger device 102 may be paired, i.e., for a bidirectional data channel to be established between the devices 102, 104. As discussed in relation to the other embodiments, this may be by enabling the touchpoint device 104 to be detectable by passenger devices 102 in its proximity (i.e., within a detectable range), or by equipping the touchpoint device 104 with other forms of establishing pairing such via a QR code or NFC pairing. In this example, the touchpoint device 102 is configured to be detectable by the passenger device.

Referring to Figure 9, the passenger opts to uses the automated biometric matching technology and enrols his or her data to the passenger device 102 (s902). The mobile application 108 provides the enrolment data to the template engine 109 (s904). In this case the enrolment data includes travel document data (e.g., passport) and a reference image (e.g. a selfie photograph). The template engine 109 accordingly generates a biometric template using the data (s906) and provides the biometric template to the mobile application 108 on the passenger device 102 (s908). Confirmation of a match between the passport data and the reference image (e.g., selfie) will successfully enrol the passenger to use the automated biometric matching technology. As the passenger approaches the airport touchpoint zone(s) (s910), the passenger device 102 will detect a touchpoint device (s912). This causes the passenger device 102 and the touchpoint device 104 to be paired, via a connection from the passenger device 102 to the routing server 106 (s914), then a connection from the routing server 106 to the touchpoint device 104 (s916). It is possible for multiple passenger devices 102, associated with different passengers, to be paired with the one touchpoint device 102. The connections may be web-based as described previously. When the passenger presents at the touchpoint device 104 this causes the biometric camera at the touchpoint device 104 to capture a live image of the passenger (s918). The captured live image is sent to the template engine 109 to generate a biometric template of the live image (s 920), and the generated template is returned to the touchpoint device 104 (s922), which provides the template to the server 106 (s924). The server 106 transmits the template to any passenger device 102 paired with the touchpoint device 104 (s926), where the paired passenger device 102 will perform a match using the transmitted template data against the stored biometric data for the passenger associated with the device 102 (s928). The transmission of the template at step s926 may be in the form of a request for the passenger device 102 to send the passenger's travel data (e.g., boarding pass data) or other data in respect of the passenger, which can allow the touchpoint device 104 to perform the appropriate touchpoint function in respect of the passenger (e.g., to check the passenger into a flight, to display information which may be personalised for the passenger, to cause further actions to be performed in respect of the passenger).

If the matching algorithm performed at step s928 on any of the paired passenger devices 102 successfully matches the template with the passenger biometric data stored on the paired passenger device 102, the paired passenger device 102 where the successful match has been made will provide the requested data. This involves the requested data being sent to the server 106 (s930), and the server 106 providing the data to the touchpoint device 104 where the live image was captured (s932). The touchpoint device 104 may display a confirmation of the successful biometric matching to the validated passenger, and may display further instructions or information for the passenger. The data connection between the touchpoint device 104 and the paired passenger device 102 where the successful match has been made may in some cases be removed, after the match.

If the matching algorithm performed at step s928 on a paired passenger device 102 does not match the template data with the passenger biometric data stored on the paired passenger device 102, then the paired passenger device 102 will not respond to the data request, and the template data sent in step s926 is deleted.

The processing as depicted in Figure 9 effectively moves a 1:1 biometric matching process to each of the paired passenger devices. The IMP or server(s) providing the template engine 109, or any of the touchpoint devices 104, will not retain the passengers' biometric data.

Variations and modifications may be made to the parts previously described without departing from the spirit or ambit of the disclosure.

For example, the pairing between each passenger device and a touchpoint device may be achieved via different means as already discussed above. Also, the biometric matching may be performed on the touchpoint device 102 locally, where the local gallery at each touchpoint device 102 is dynamically updated based on the pairings and transactions which have occurred involving the touchpoint device 102. Or the biometric matching may be performed by the passenger devices 102. In either case, the passengers' biometric data are not retained in a central IMP, either for the airport or terminal network or for a particular touchpoint zone within the airport or terminal network.

In the embodiments, the relevant images, such as the passport photo, the selfie image, and the live image captured by the touchpoint device 104, are templatized and then the templates are used for the purpose of biometric matching. However, the embodiments may instead be implemented to match the images, rather than the templates.

In the embodiments, the process of biometric identity verification may be combined with other workflows to improve the security of the system against attacks such as spoofing attaches, or to secure data transmissions.

In embodiments, to help mitigate against risks of interception or injection attacks on the data transmission, the session ID at a touchpoint device may be subject to updates. For example, a rotation of multiple session IDs may be used in respect of a touchpoint device 104, so that the data connections for the touchpoint device 104 will have different session IDs during different time periods.

For example, once a biometric match has occurred in which a passenger is matched with an enrolment record and the passenger's identity thus validated, the session ID for the touchpoint device 104 involved in the match occurred will be updated.

Such an update will not affect the matching in respect of any other passenger devices 102 which have been paired to the touchpoint device 104 using the old session ID. Consider the embodiment where passenger devices 104 provide the passenger enrolment data to the touchpoint device 102 once the pairing occurs. In a scenario where multiple passenger devices 102 are paired with a touchpoint device 104 and the data connections all had the same session ID (the "old session ID"), if a biometric match has occurred in respect of the passenger corresponding to one of the paired passenger devices 102, this causes the connections to the touchpoint device 104 to be assigned with a new session ID. At the other paired passenger devices 102 in respect of which a biometric match to validate the passenger's identity has not occurred, the respective mobile applications 108 will be also be updated with the new session ID. However, changing the session ID for the other paired passenger devices 102 does not affect the ability for the touchpoint device 104 to transact with the other paired passenger devices. This is because the passenger data is already included in the local gallery of the touchpoint device 104.

In another example, a new session ID will only be used in respect of the connections with a touchpoint device 104, after a successful biometric matching transaction has occurred in respect of each of all of the passenger devices 102 already paired with the touchpoint device 104.

In further examples, there may be a combination of "triggers" to cause the session ID to be updated. For example, the session ID may be updated in response to any biometric matching transaction, or in response to all of the paired passenger devices having transacted with the touchpoint device; and the session ID is also updated after a preset time period regardless of whether any biometric transactions have occurred.

Disclosures of the embodiments above are in the context of passengers transiting through an airport, and therefore the data which is registered in respect of the passengers include travel data. However, in embodiments not in the context of travel, the data which is registered in respect of the users of the technology may not necessarily include travel data.

In the embodiments, the validation of a user's identity at a touchpoint device may permit a touchpoint function corresponding to the touchpoint device to be performed. The function may comprise controlling or activating the operation of an apparatus, such as an access gate, a door, a bag-drop machine, etc., to open the access gate, door, activate the bag-drop machine, etc. Other apparatus may be controlled depending on the context in which the touchpoint device is used.

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

## Claims

1. A method for performing biometric identity validation to confirm identity of a user, comprising:
providing a mobile application configured to be executed on a device of the user, to:
register an enrolment data in respect of the user, for enrolling the user for biometric identity validation;
when the user device is in proximity of one or more biometric touchpoint devices, enable pairing between the user device and the one or more biometric touchpoint devices to establish, with each of the one or more biometric touchpoint devices, a respective data connection between the user device and the biometric touchpoint devices, the one or more biometric touchpoint devices each comprising a biometric camera;
in response to the user presenting at any one of the one or more biometric touchpoint devices to be processed thereby, and the biometric touchpoint device capturing a live image data of the user:
processing the captured live image data to obtain a live biometric data;
enabling a data transfer to transfer at least the live biometric data, or a reference biometric data obtained from the enrolment data, between the biometric touchpoint device that captured the live image data and the device of the user via the established data connection; and
confirming the identity of the user based on a result of a match between the live biometric data and the reference biometric data.

2. A method in accordance with claim 1, wherein for each of the one or more biometric touchpoint devices, establishing the data connection between the user device and the biometric touchpoint device comprises establishing connection with a server destination for receiving, from the user device, data which is to be provided to the biometric touchpoint device.

3. A method in accordance with claim 1 or 2, comprising providing the reference biometric data to the one or more biometric touchpoint devices paired with the user device, wherein each biometric touchpoint device dynamically keeps a local biometric gallery, and the reference biometric data is added to the respective local biometric galleries.

4. A method in accordance with claim 4, comprising, at the touchpoint device where the live image data is captured, executing a biometric matching algorithm to determine if there is a match of the live biometric data in the local biometric gallery, and, if there is a match of the live biometric data in the local biometric gallery, removing the reference biometric data in respect of the user from the local biometric gallery.

5. A method in accordance with any claim 3 or 4, comprising removing the reference biometric data of the user at the local biometric gallery at any of the one or more biometric touchpoint devices if the reference biometric data is still included in the local biometric gallery at a predetermined time.

6. A method in accordance with any one of claims 3 to 5, comprising the biometric touchpoint device where the live image data is captured providing a result of the determination to the user device, over its communication channel with the user device.

7. A method in accordance with any preceding claim, comprising providing the live biometric data to the user device, wherein the mobile application is configured to cause a biometric matching algorithm to be run to determine whether there is a match between the live biometric data provided in the data transfer and the reference biometric data.

8. A method in accordance with any one of claims 1 to 7, wherein the mobile application is configured to provide activation control by defining the biometric touchpoint devices at which the user's identity can be validated, wherein the activation control is updated as the user interacts with a network of biometric touchpoint devices comprising the one or more biometric touchpoint devices.

9. A method in accordance with any one of claims 1 to 8, wherein enabling the pairing between the user device and the one or more biometric touchpoint devices comprises configuring the one or more biometric touchpoint devices to be detectable by the user device when the user device is within a detection range from the user device.

10. A method in accordance with claim 9, comprising configuring each of the one or more biometric touchpoint devices to broadcast a signal detectable by the user device, the signal comprising an identifier in respect of the data communication channel to be established with that biometric touchpoint device.

11. A method in accordance with claim 9 or 10, comprising associating each of the one or more biometric touchpoint devices with location information and providing the location information to the mobile application, wherein the mobile application is configured to monitor a current location of the user device and to search for biometric touchpoint devices which are located in an area which includes the current location of the user device.

12. A method in accordance with any one of claims 1 to 11, wherein the enrolment data comprises at least one of:
information from an identity document data and a reference image of the user, travel data, user language data, user preference data and accessibility data.

13. A touchpoint device for performing a touchpoint function at a travel or access location, comprising:
a biometric sensor arrangement;
a display interface;
a data communication module;
a processor and computer readable medium, the computer readable medium storing computer executable instructions which when executed by the processor cause the touchpoint device to:
establish one or more data connections, respectively with each of one or more user devices located in proximity of the touchpoint device and configured to hold reference biometric data associated with corresponding users;
in response to a user presenting at the touchpoint device to be processed thereby:
control the biometric sensor arrangement to acquire live data of the user;
cause a live biometric data obtained from the acquired live data to be provided to the one or more user devices, or receive the reference biometric data from each of the one or more user devices via the established data connections;
process the user by performing the touchpoint function in respect of the user, upon a confirmation of a match between the live biometric data and any of the reference biometric data.

14. A touchpoint device in accordance with claim 13, wherein the computer readable medium is configured to store a local biometric gallery comprising the reference biometric data from the one or more user devices with established data connections to the touchpoint device and to remove any user enrolment data from the local biometric gallery upon confirmation it has been matched with any live biometric data obtained from live image data captured by the biometric sensor arrangement.

15. A touchpoint device in accordance with claim 13 or 14, further configured to remove any user enrolment data from the local biometric gallery within a predetermined time period after the user enrolment data being added to the local biometric gallery.

16. A touchpoint device in accordance with any one of claims 13 to 15, further comprising a transmission device configured to broadcast a signal within a transmission range, wherein the one or more user devices with which the data connections are established are in the transmission range.

17. A method of controlling restricted access for operating an apparatus or for passing through a checkpoint, comprising:
providing a touchpoint device in accordance with any one of claims 13 to 16;
wherein a touchpoint function of the touchpoint device comprises causing an operation of the apparatus or granting access through the checkpoint, so that in response to the touchpoint device processing a user whose identity has been confirmed, the operation of the apparatus is enabled or the access through the checkpoint is granted.
